# EUROPÄISCHE PATENTSCHRIFT

(11) **EP 2 358 572 B1**
(45) Veröffentlichungstag und Bekanntmachung des Hinweises auf die Patenterteilung: **10.10.2012**
(21) Anmeldenummer: 09782173.0
(22) Anmeldetag: 25.08.2009
(51) Int. Cl.: B60T 7/22, B60W 50/08

(54) **VERFAHREN ZUR EINSTELLUNG EINES BREMSSYSTEMS EINES FAHRZEUGS IM FALLE EINER KOLLISION**
METHOD FOR ADJUSTING A BRAKE SYSTEM OF A VEHICLE IN THE EVENT OF A COLLISION
PROCÉDÉ D'AJUSTEMENT DU SYSTÈME DE FREINAGE D'UN VÉHICULE AUTOMOBILE EN CAS DE COLLISION

(30) Priorität: 20.10.2008 DE 102008042962
(43) Veröffentlichungstag der Anmeldung: 24.08.2011
(73) Patentinhaber: Robert Bosch GmbH, 70442 Stuttgart (DE)
(72) Erfinder: CETINKAYA, Ferah, 74360 Ilsfeld (DE); EISELE, Sybille, 74394 Hessigheim (DE); SCHMID, Michael, 70806 Kornwestheim (DE); SCHAEFFLER, Ralf, 71711 Steinheim (DE)
(86) Internationale Anmeldenummer: PCT/EP2009/060943
(87) Internationale Veröffentlichungsnummer: WO 2010/046160

(56) Entgegenhaltungen:
- EP-A- 1 010 596
- EP-A- 1 852 323
- WO-A-2007/113135
- DE-A1-102004 058 814
- DE-A1-102004 062 496
- DE-A1-102005 039 307
- DE-A1-102006 036 218
- US-A1- 2002 020 575

## Beschreibung

Die Erfindung bezieht sich auf ein Verfahren zur Einstellung eines Bremssystems eines Fahrzeugs nach dem Oberbegriff des Anspruches 1.

### Stand der Technik

Aus der DE 197 53 971 A1 ist ein Verfahren zur Steuerung einer Bremsanlage eines Fahrzeugs bekannt, mit dessen Hilfe bei einer erkannten Kollisionssituation selbsttätig Bremskraft über die Vorgabe des Fahrers hinausgehend aufgebaut wird. Durch den selbsttätigen Aufbau der Bremskraft wird bei Kollisionen die Unfallschwere vermindert bzw. ein Folgeunfall verhindert. Auf Grund der zusätzlichen Bremskraft verbleibt das Fahrzeug im Stillstand oder wird in kürzerer Zeit in den Stillstand gebracht.

Der selbsttätige Aufbau der Bremskraft kann durch eine definierte Fahrerreaktion abgebrochen werden. Hierfür werden verschiedene Bedingungen formuliert, die alternativ erfüllt sein müssen, damit der automatische Bremskraftaufbau abgebrochen wird. Als Kriterium wird in der DE 197 53 971 A1 genannt, dass der Fahrer das Bremspedal und/oder die Feststellbremse löst, sofern die Fahrzeuggeschwindigkeit zugleich einen Minimalwert überschreitet. Auch bei einer Betätigung des Beschleunigungspedals wird der automatische Bremskraftaufbau abgebrochen. Hintergrund dieser Vorgehensweise ist es, dass der Fahrer aufgrund einer bewussten Reaktion die Hoheit über die alleinige Betätigung und Steuerung des Fahrzeugs zurückerlangt. Allerdings ist hierbei zu berücksichtigen, dass die Betätigung eines Fahrpedals durch den Fahrer im Falle einer Kollision, also eine Betätigung des Beschleunigungspedals oder des Bremspedals, nicht in jedem Fall zwingenderweise auf eine bewusste Reaktion des Fahrers zurückgeführt werden kann. Auch durch Panikreaktionen kann der Fahrer die Pedalerie betätigen, was den selbsttätigen Bremskraftaufbau außer Kraft setzt, auch wenn dies zu einer gefährlicheren Verkehrssituation führt als bei einer Fortsetzung der selbsttätigen Bremskrafterzeugung.

Die US 2002/0020575 A1 offenbart ein Verfahren zur Einstellung eines Bremssystems eines Fahrzeugs mit selbsttätigem Bremskraftaufbau im Falle einer Kollision, wobei der selbsttätige Bremskraftaufbau durch einen manuellen Fahrereingriff außer Kraft gesetzt werden kann, indem untersucht wird, ob die Drosselklappe bzw. das Gaspedal sich in halbgeöffneter bzw. halbdurchgetretener Position befinden. Der selbsttätige Bremskrafteingriff wird daraufhin schlagartig zurückgenommen. Bei einer geringeren Gaspedalbetätigung wird dagegen der selbsttätige Bremskraftaufbau graduell zurückgefahren. Die Zurücknahme des selbsttätigen Bremskraftaufbaus erfolgt jedoch nur dann, wenn das Gaspedal vom Fahrer mindestens eine halbe Sekunde durchgetreten wird.

Aus der DE 2006 036 218 A1 ist es bekannt, im Falle einer Kollision einen selbsttätigen Bremseingriff durchzuführen, der abgebrochen wird, wenn das Fahrpedal über eine Schreckreaktionsdauer hinaus mit einer Mindestintensität betätigt wird. Die DE 2005 039 307 A1 offenbart, in Abhängigkeit eines Gefahrpotenzials eine Notfallbremsung zu aktivieren und diese wieder abzuschalten, wenn das Fahrzeug über einen vorbestimmten Zeitraum stabil fährt und das Gaspedal mit einer vorbestimmten Intensität und über einen definierten Zeitraum betätigt wird. Aus der DE 2004 062 496 A1 geht ein Systemeingriff zur Kollisionsfolgenminderung in Form einer Notbremsung hervor, die deaktiviert wird, wenn der Bremspedalweg sowie die Bremspedalgeschwindigkeit jeweils einen Schwellenwert übersteigen.

### Offenbarung der Erfindung

Der Erfindung liegt die Aufgabe zu Grunde, die Schwere von Unfällen im Falle einer Kollision des Fahrzeugs zu verringern.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung eines Bremssystems eines Fahrzeuges wird im Falle einer Kollision selbsttätig Bremskraft aufgebaut, um entweder die Fahrzeuggeschwindigkeit so schnell wie möglich zu reduzieren oder, falls das Fahrzeug sich im Augenblick der Kollision bereits im Stillstand befindet, die durch den Kollisionsimpuls entstandene Fahrzeugbewegung abzubauen und das Fahrzeug zum Stillstand zu bringen. Die Bremskraft wird durch eine Beaufschlagung des Bremssystems selbsttätig aufgebaut, wobei das Bremssystem eine hydraulische Bremseinheit, eine elektrohydraulische Bremseinheit, eine elektromotorische Bremseinheit oder ggf. auch eine elektropneumatische Bremseinheit umfassen kann. Die Bremseinheiten werden durch Stellsignale eines Regel- bzw. Steuergerätes eingestellt, beispielsweise eines ESP-Regelgeräts (elektronisches Stabilitätsprogramm). Die Information über eine erfolgte oder unmittelbar bevorstehende Kollision werden dem Regel- bzw. Steuergerät über eine fahrzeugeigene Sensorik zugeführt, beispielsweise über eine Umfeldsensorik wie z.B. radargestützte Sensoren, Lidarsensoren, Ultraschallsensoren oder optische Sensoren, mit deren Hilfe ein Aufprall auf das Fahrzeug detektiert werden kann. Infrage kommen als sensorische Signale auch Fahrzustandssensoren, mit denen eine oder mehrere Zustandsgrößen zur Längs- und Querdynamik ermittelt werden können, wie beispielsweise die Fahrzeuggeschwindigkeit, die Längsbeschleunigung, die Querbeschleunigung, die Gierrate oder Radschlupfwerte. Schließlich können auch Signale einer Airbagsensorik verarbeitet werden, indem ein selbsttätiger Bremskraftaufbau durchgeführt wird, sobald ein oder mehrere Airbags im Fahrzeug ausgelöst werden.

Um die Fahrerautonomie so weit wie möglich zu gewährleisten und dem Fahrer weitgehende Hoheit über das Fahrzeug zu geben, werden im Falle einer Kollision und dem selbsttätigen Bremskraftaufbau bestimmte Fahrerreaktionen festgelegt, die zu einem Abbruch des selbsttätigen Bremskraftaufbaus führen. Bei der Festlegung, ob eine Fahrerreaktion zu einem Abbruch oder zu einer Fortsetzung des Bremskraftaufbaus bzw. der Bremskrafterzeugung führt, muss der Vorteil der Fahrerhoheit einem möglichen Nachteil durch den Abbruch der selbsttätigen Bremskrafterzeugung gegenübergestellt werden. Um durch den Abbruch keine zusätzliche Gefährdung zu erzeugen, werden daher die Fahrerreaktionen in der Weise festgelegt, dass ein bewusstes Überstimmen und der damit einhergehender Abbruch des selbsttätigen Bremskraftaufbaus von einer Panikreaktion des Fahrers mit größtmöglicher Sicherheit unterschieden werden kann.

Gemäß der Erfindung wird der selbsttätige Bremskraftaufbau abgebrochen, wenn die Betätigung eines Fahrpedals eines Fahrzeugs, also die Betätigung des Bremspedals, des Beschleunigungs- bzw. des Gaspedals und/oder eines ggf. vorhandenen Kupplungspedals sowie eines Pedals für eine Feststellbremse, durch den Fahrer mit einer definierten Stärke sowie für einen Mindestbetätigungszeitraum aufrecht erhalten wird. In diesem Fall kann mit hoher Wahrscheinlichkeit von einer bewussten Fahrerreaktion ausgegangen werden, was die Übertragung der Hoheit über das Fahrzeugverhalten von dem selbsttätig agierenden Bremssystem zurück auf den Fahrer rechtfertigt. Panikreaktionen des Fahrers sind dagegen von einer üblicherweise begrenzten, verhältnismäßig kurzen Betätigung mit hoher Kraft der Pedalerie gekennzeichnet; derartige Panikreaktionen werden über eine entsprechend höhere Betätigungsdauer eines Pedals von bewussten Fahrerreaktionen unterschieden.

Der Mindestbetätigungszeitraum, über den ein Pedal im Fahrzeug vom Fahrer betätigt werden muss, damit eine bewusste Fahrerreaktion erkannt und der selbsttätige Bremskraftaufbau abgebrochen wird, kann entweder als feste Zeitspanne festgelegt oder situationsabhängig als variable Zeitspanne bestimmt werden, deren Dauer vom zeitlichen Verlauf einer Fahrzustandsgröße, insbesondere der Fahrzeuggeschwindigkeit abhängt. Es können verschiedene Fahrerreaktionen unterschieden werden, wobei je nach Fahrerreaktion entweder der feste Mindestbetätigungszeitraum oder der variable Mindestbetätigungszeitraum zum Tragen kommt. So hat sich beispielsweise der feste Mindestbetätigungszeitraum für ausreichend erwiesen, wenn der Fahrer während des selbsttätigen Bremskrafteingriffes in hinreichender Weise selbst das Bremspedal betätigt und dadurch Bremskraft erzeugt, nach dem Eintritt einer Kollision das Gaspedal betätigt und/oder bereits vor dem Eintritt der Kollision das Gaspedal betätigt, wobei in allen vorgenannten Situationen die Pedalbetätigung über den festgelegten Mindestbetätigungszeitraum erfolgen muss, damit der selbsttätige Bremseingriff abgebrochen wird.

Eine variable Festlegung des Mindestbetätigungszeitraum wird dagegen bevorzugt in Fahrsituationen eingesetzt, wenn der Fahrer im Falle einer Kollision sowohl das Gaspedal als auch das Bremspedal betätigt oder zusätzlich zum Gaspedal auch das Kupplungspedal einsetzt. Die Dauer dieser Betätigung richtet sich in diesem Fall nach dem Erreichen eines bestimmten Wertes einer Fahrzustandsgröße, insbesondere der Fahrzeuggeschwindigkeit. So kann es zweckmäßig sein, den selbsttätigen Bremseingriff abzubrechen, wenn die genannte Pedalbetätigung so lange erfolgt, bis das Fahrzeug eine Mindestgeschwindigkeit erreicht hat. Bei diesem Fahrerverhalten kann mit hoher Sicherheit davon ausgegangen werden, dass die Zunahme der Fahrzeuggeschwindigkeit in der Absicht des Fahrers liegt.

Grundsätzlich möglich ist es aber auch, als zu erreichenden Zustandsgrößenwert eine untere Grenze zu definieren, beispielsweise eine untere Geschwindigkeitsschranke, die vom Fahrzeug unterschritten werden muss, damit auf eine bewusste Fahrerreaktion geschlossen werden kann und die selbsttätige Bremskrafterzeugung abgebrochen wird. Des Weiteren ist es möglich, als zu berücksichtigende Fahrzustandsgrößen Beschleunigungswerte der Längs- oder Querdynamik vorzugeben, beispielsweise für die Fahrzeugbeschleunigung bzw. -Verzögerung.

Die Berücksichtigung von Mindestbetätigungszeiträumen als feste Zeitspanne oder als variable Zeitspanne wird situativ festgelegt, so dass beide Möglichkeiten gleichrangig nebeneinander in einem Bremssystem eines Fahrzeuges realisiert sein können und erst durch eine entsprechende Fahrerreaktion die feste bzw. die variable Zeitspanne aktiviert wird.

Sowohl bei einem festen als auch bei einem variablen Mindestbetätigungszeitraum kann der Beginn dieses Zeitraumes fest oder variabel festgelegt werden. Der feste Beginn wird beispielsweise auf einen bestimmten Zeitpunkt nach dem Ablauf eine vorgegebenen Zeitspanne im Anschluss an eine Schrecksekunde festgelegt. Der variable Beginn hängt vom Verlauf einer oder mehrerer Zustandsgrößen ab, beispielsweise vom Schnittpunkt der Druckanstiegsverläufe, welche auf eine Betätigung des Bremspedals durch den Fahrer und auf den selbsttätigen Bremskraftaufbau zurückgehen.

Die Betätigung eines Fahrpedals muss ein definiertes Mindestmaß erreichen, um vom System überhaupt als Betätigung anerkannt zu werden, woraufhin nach einer Auswertung ggf. die selbsttätige Bremskrafterzeugung abgebrochen wird. Als Fahrpedalbetätigung kommen neben dem absoluten Niveau auch der Gradient der Pedalbetätigung in Betracht. Sinnvollerweise muss die Pedalbetätigung mit einem Mindestniveau erfolgen, damit eine Fahrerreaktion erkannt wird, die bei Vorliegen der sonstigen Bedingungen zu einem Abbruch des selbsttätigen Bremskraftaufbaus führt. Das Mindestniveau wird beispielsweise über das Maß festgelegt, mit dem das betreffende Pedal vom Fahrer aus der Ruhe- bzw. Ausgangsposition verstellt wird. In Betracht kommt aber auch eine Berücksichtigung der Wirkung des Pedalbetätigung, beispielsweise des Maßes des vom Fahrer erzeugten Bremsdruckaufbaus.

Auch die Berücksichtigung des Gradienten kann als zusätzliche Information zur Festlegung eines bewussten Abbrechens der automatischen Bremskrafterzeugung herangezogen werden. So deutet beispielsweise ein sehr steiler Gradient eher auf eine Panikreaktion als ein etwas flacher verlaufender Gradient bei der Pedalbetätigung.

Gegebenenfalls wird auch das Maximalniveau der Fahrerpedalbetätigung im Hinblick auf den Abbruch der selbsttätigen Bremskrafterzeugung berücksichtigt. So kann es zweckmäßig sein, den Abbruch nur für den Fall vorzunehmen, dass über die Bremspedalbetätigung das Bremskraftniveau der selbsttätigen Bremskrafterzeugung erreicht bzw. überschritten wird.

Weitere Vorteile und zweckmäßige Ausführungen sind den weiteren Ansprüchen, der Figurenbeschreibung und den Ansprüchen zu entnehmen. Es zeigen:
- Fig. 1: in schematischer Darstellung ein Kraftfahrzeug, welches mit vorderen und hinteren Bremseinrichtungen sowie mit einem Regel- bzw. Steuergerät zur Einstellung der Bremseinrichtungen versehen ist,
- Fig. 2: ein Schaubild mit verschiedenen Verläufen von Pedalbetätigungen bzw. selbsttätig erzeugter Bremskraft als Funktion der Zeit, dargestellt für den Fall, dass die selbsttätig erzeugte Bremskraft durch ausreichende Bremsbetätigung durch den Fahrer abgebrochen wird,
- Fig. 3: ein weiteres Schaubild mit dem Fall, dass die automatisch erzeugte Bremskraft durch Betätigung des Beschleunigungspedals nach einer Kollision sowie während eines zeitgleichen selbsttätigen Bremseingriffs betätigt wird,
- Fig. 4: ein Schaubild, welches den Fall darstellt, dass der Fahrer das Beschleunigungspedal bereits vor der Kollision betätigt,
- Fig. 5: ein Schaubild für den Fall, dass der Fahrer sowohl das Beschleunigungspedal als auch das Bremspedal zum Abbruch des selbsttätigen Bremskraftaufbaus betätigt,
- Fig. 6: ein Schaubild für den Fall, dass der Fahrer zum Abbruch der selbsttätigen Bremskrafterzeugung sowohl das Beschleunigungspedal als auch das Kupplungspedal betätigt.

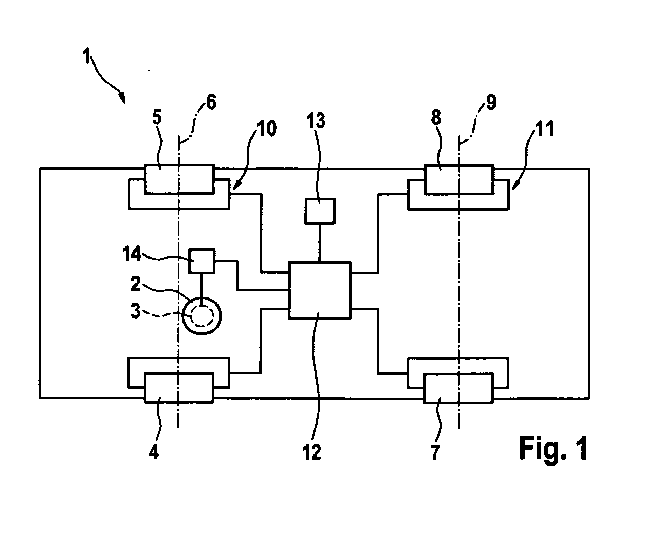

In Fig. 1 ist ein Kraftfahrzeug 1 in schematischer Weise dargestellt. Das Kraftfahrzeug 1 ist über Betätigung eines Lenkrades 2 zu steuern, wobei in das Lenkrad 2 ein Airbag 3 integriert ist, welcher über Stellsignale eines zugeordneten Airbag-Steuergerätes 14 auszulösen ist. Das Kraftfahrzeug 1 weist ein Bremssystem mit einer vorderen Bremseinrichtung 10 und einer hinteren Bremseinrichtung 11 auf, wobei die Bremseinheiten der vorderen Bremseinrichtung 10 auf die an der Vorderachse 6 drehbar gelagerten Vorderräder 4 und 5 einwirken und die Bremseinheiten der hinteren Bremseinrichtungen 11 auf die an der Hinterachse 9 drehbar gelagerten Hinterräder 7 und 8. Als Bremseinheiten können hydraulische Bremsen, elektrohydraulische Bremsen, elektromotorische Bremsen oder ggf. auch elektropneumatische Bremsen eingesetzt werden, wobei sich die Bremsentypen von vorderer und hinterer Bremseinrichtung 10 bzw. 11 ggf. auch voneinander unterscheiden können.

Die Bremseinrichtungen 10 und 11 werden über Stellsignale eines Regel- bzw. Steuergerätes 12 eingestellt, bei dem es sich ggf. um ein ESP-Steuergerät handelt. Über Datenleitungen, beispielsweise einen CAN-Bus, ist das Regel- bzw. Steuergerät 12 mit dem Airbag-Steuergerät 14 verbunden. Darüber hinaus empfängt das Regel- bzw. Steuergerät 12 Sensorsignale von einer Sensorik 13, mit der bevorzugt Fahrzustandsgrößen der Längs- und/oder Querdynamik ermittelt werden können, beispielsweise die Fahrzeuglängsgeschwindigkeit, die Längsbeschleunigung, die Querbeschleunigung, die Gierrate oder Radschlupfwerte. Die Sensorik 13 kann darüber hinaus oder alternativ auch eine Umfeldsensorik umfassen, mit der das Umfeld des Kraftfahrzeugs 1 erfasst wird, beispielsweise der Abstand und die Relativgeschwindigkeit zu einem vorausfahrenden Fahrzeug. Als Umfeldsensorik kommen radargestützte Sensoren, Lidarsensoren, optische Sensoren oder Ultraschallsensoren in Betracht.

Im Falle einer Kollision des Kraftfahrzeugs 1 mit einem anderen Fahrzeug oder einem sonstigen Gegenstand werden in dem Regel- bzw. Steuergerät 12 Stellsignale zum selbsttätigen Bremskraftaufbau in den Bremseinrichtungen 10 und 11 generiert, um durch diesen selbsttätigen Bremskraftaufbau die Schwere der Unfallfolgen zu verringern. Grundsätzlich erfolgt der selbsttätige Bremskraftaufbau unabhängig von einer Betätigung des Bremspedals durch den Fahrer. Möglich ist aber auch der selbsttätige Aufbau von Bremskraft für den Fall, dass das Bremspedal von dem Fahrer betätigt wird, wobei der selbsttätige Bremskraftaufbau vorzugsweise zu einem früheren Zeitpunkt erfolgt, so dass Verzögerungen im Bremskraftaufbau durch den Fahrer vom selbsttätigen Bremskraftaufbau kompensiert werden.

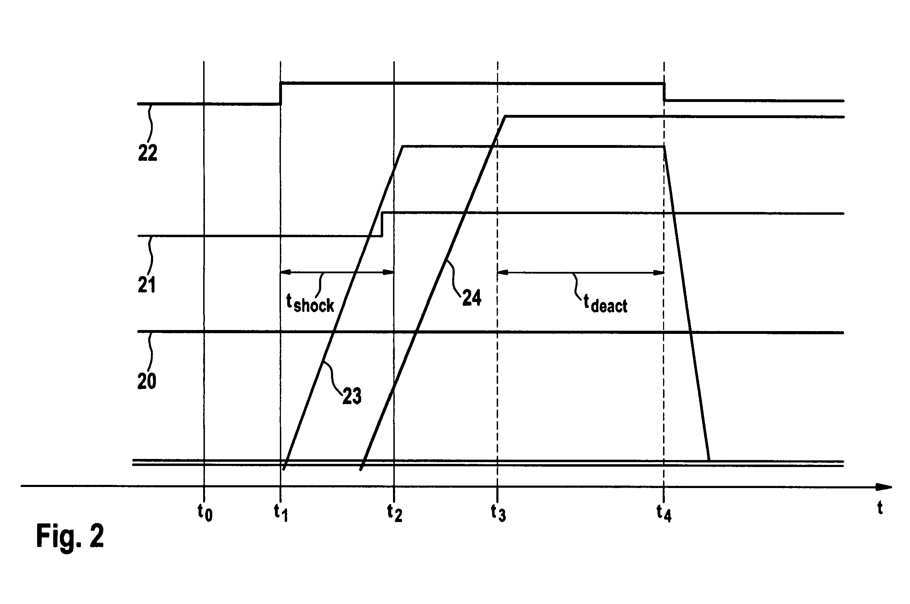

Um dem Fahrer weitestgehende Autonomie im Hinblick auf die Beherrschung des Fahrzeugs zu belassen, werden bestimmte Fahrsituationen festgelegt, in denen der Fahrer durch eine Reaktion den selbsttätigen Bremskraftaufbau abbrechen kann. In den folgenden Figuren 2 bis 6 werden insgesamt fünf verschiedene derartige Fahrsituationen beschrieben, die zu einem Abbruch des selbsttätigen Bremskraftaufbaus führen.

In Fig. 2 ist auf der Abszisse die Zeit t abgebildet. Zum Zeitpunkt t₀ tritt eine Kollision des Fahrzeuges ein. Zu diesem Zeitpunkt t₀ ist sowohl das Beschleunigungspedal gemäß Kurvenverlauf 20 als auch das Bremspedal gemäß Kurvenverlauf 21 im unbetätigten Zustand. Die Kurve 22 stellt den Aktivitätsverlauf des Systems zum selbsttätigen Aufbau von Bremskraft (SCM - Secondary Collision Mitigation) dar. Auch das SCM-System zum selbsttätigen Aufbau von Bremskraft befindet sich gemäß Kurvenverlauf 22 im Zeitpunkt t₀, zu dem die Kollision eintritt, im unbetätigten Zustand.

Zum nächsten Zeitpunkt t₁ wird das SCM-System zum selbsttätigen Aufbau von Bremskraft aktiviert. Dementsprechend springt der Verlauf der Kurve 22 zum Zeitpunkt t₁ auf einen höheren Wert, der den Aktivierungszustand repräsentiert. Zeitgleich steigt der Bremsdruck gemäß Kurvenverlauf 23 aufgrund der Bremsenbetätigung über das SCM-System bis zum Erreichen eines Maximalwertes an.

Der maximale Bremsdruck, welcher vom SCM-System eingestellt wird, wird kurz nach einem weiteren Zeitpunkt t₂ erreicht. Die Zeitspanne zwischen t₁ und t₂ ist als Schrecksekunde definiert und in Fig. 2 als t_{shock} bezeichnet; vom Fahrer in dieser Phase unternommene Pedalbetätigungen werden im Hinblick auf einen möglichen Abbruch des selbsttätigen Bremskraftaufbaus ignoriert. Im Ausführungsbeispiel gemäß Fig. 2 wird kurz vor Erreichen des Zeitpunktes t₂ vom Fahrer gemäß Kurvenverlauf 21 das Bremspedal betätigt. Diese Bremspedalbetätigung hat aber keinen Einfluss auf den Abbruch der selbsttätigen Bremskrafterzeugung, auch wenn als Folge der Bremspedalbetätigung der vom Fahrer erzeugte Bremsdruck gemäß Kurvenverlauf 24 ansteigt.

Erst zu einem Zeitpunkt t₃, der durch einen Schnittpunkt der Druckverlaufskurven 23 und 24 gekennzeichnet ist, welche auf das SCM-System bzw. den Fahrer zurückgehen, werden Fahrerreaktionen im Hinblick auf einen möglichen Abbruch des selbsttätigen Bremskraftaufbaus berücksichtigt. Kurz nach dem Zeitpunkt t₃ ist das maximale, vom Fahrer durch die Bremspedalbetätigung erzielte Bremskraftniveau erreicht. Wird dieses Bremskraftniveau bis zum Zeitpunkt t₄ aufrecht erhalten, so wird die automatische Bremskraftgenerierung über das SCM-System wie im Ausführungsbeispiel gemäß Fig. 2 dargestellt abgebrochen, woraufhin auch der Druckverlauf gemäß Kurve 23 bis auf den Wert null abfällt. Die Zeitspanne zwischen t₃ und t₄ ist als t_{deact} bezeichnet, es handelt sich hierbei um einen Mindestbetätigungszeitraum, über den die Bremspedalbetätigung durch den Fahrer aufrecht erhalten werden muss, und zwar mit einem Bremsdruck, der oberhalb des vom SCM-System erzeugten Bremsdruckes liegt. Ist dies wie in Fig. 2 dargestellt der Fall, erfolgt der Abbruch der selbsttätigen Bremskrafterzeugung.

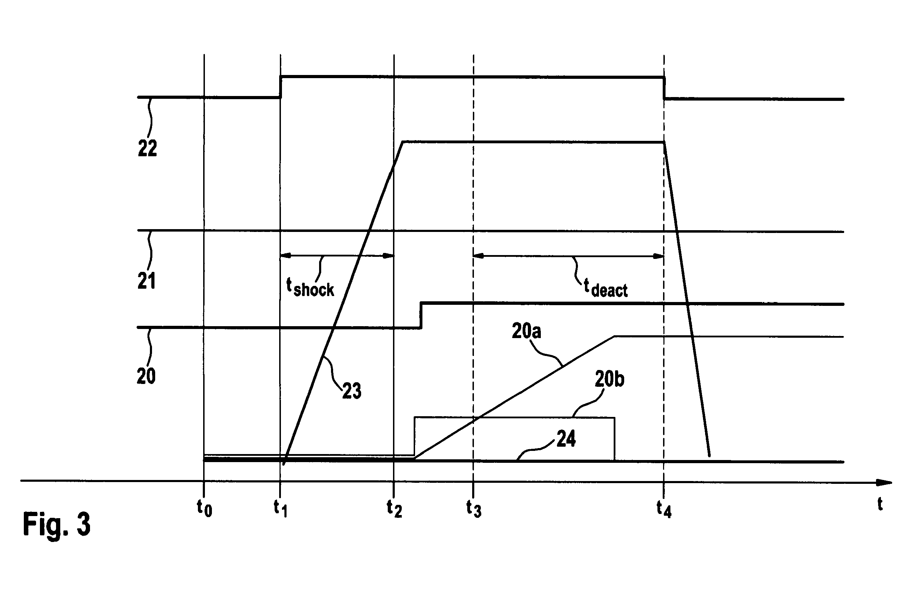

In den folgenden Figuren 3 bis 6 haben die dort eingetragenen Zeitpunkte t₀ bis t₄ die gleiche Bedeutung wie im Ausführungsbeispiel gemäß Fig. 2. Auch die Kurvenverläufe sind mit gleichen Bezugszeichen versehen, so dass zur Bedeutung der verschiedenen Kurvenverläufe auch auf die Beschreibung von Fig. 2 Bezug genommen wird.

In Fig. 3 ist die Situation dargestellt, dass der Fahrer nach dem Eintritt einer Kollision zum Zeitpunkt t₀ und nach Ablauf des Mindestzeitraumes t_{shock} zwischen den Zeitpunkten t₁ und t₂ gemäß Kurvensignalverlauf 20 das Beschleunigungspedal betätigt. Mit 20a ist der Verstellweg der Beschleunigungspedalbetätigung dargestellt, der Kurvenverlauf 20b zeigt den Gradienten zum Verstellweg 20a. Das Bremspedal bleibt unbetätigt, dementsprechend nimmt der Kurvensignalverlauf 24 für das Bremspedal durchgehend den Wert null ein.

Der Mindestbetätigungszeitraum t_{deact} zwischen den Zeitpunkten t₃ und t₄ zeigt wie im vorangegangenen Ausführungsbeispiel diejenige Zeitspanne an, über die die Pedalbetätigung aufrecht erhalten werden muss, damit zum Zeitpunkt t₄ die selbsttätige Bremskrafterzeugung über das SCM-System abgebrochen wird. Die Betätigung des Beschleunigungspedals erfolgt gemäß Kurvenverlauf 20, 20a und 20b bereits vor dem Erreichen des Zeitpunktes t₃, welcher den Start des Mindestbetätigungszeitraumes t_{deac}t kennzeichnet. Zwischen t₂ und t₄ bleibt die Betätigung des Beschleunigungspedals aufrecht erhalten.

Die Zeitpunkte t₃ und t₄, die den Beginn und das Ende des Mindestbetätigungszeitraumes t_{deact} kennzeichnen, werden fest vorgegeben. Beispielsweise richtet sich der Beginn t₃ nach dem Ende der Schrecksekunde t_{shock} zum Zeitpunkt t₂. Das Ende zum Zeitpunkt t₄ ist durch die vorgegebene Dauer des Mindestbetätigungszeitraumes t_{deact} festgelegt.

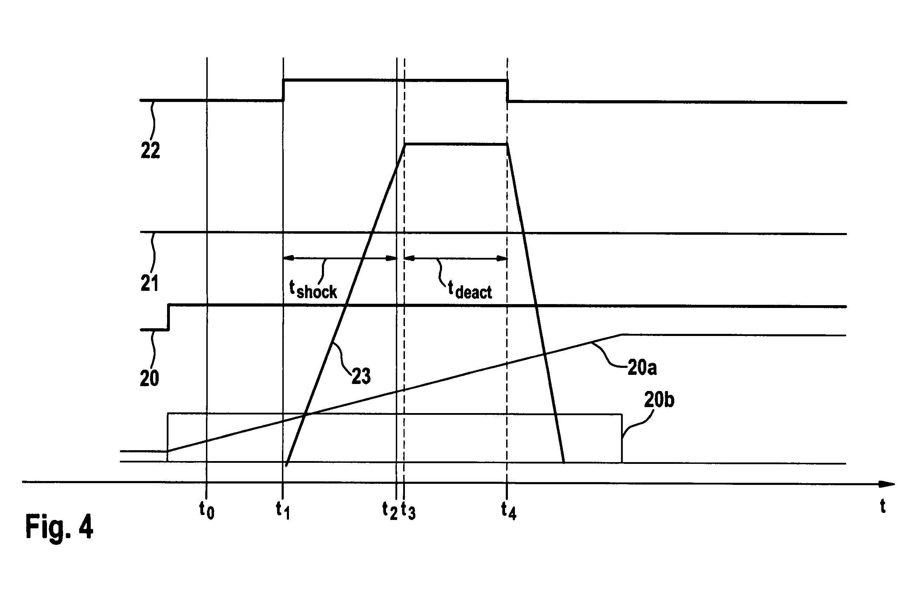

Im Ausführungsbeispiel nach Fig. 3 ist das Beschleunigungspedal gemäß Kurvenverlauf 20 erst nach dem Eintritt der Kollision zum Zeitpunkt t₀ vom Fahrer betätigt worden. Im Ausführungsbeispiel gemäß Fig. 4 ist dagegen die Fahrsituation dargestellt, dass das Beschleunigungspedal bereits vor dem Eintritt der Kollision zum Zeitpunkt t₀ vom Fahrer betätigt wird, wie dem Kurvenverlauf 20 in Fig. 4 zu entnehmen ist, der einen Anstieg in der Betätigung bereits vor t₀ zeigt. Die Betätigung des Beschleunigungspedals wird gemäß Verlauf 20 aufrecht erhalten, und zwar sowohl während der Schrecksekunde im Zeitraum t_{shock} als auch im Mindestbetätigungszeitraum t_{deact}, so dass auch die Bedingungen für die Deaktivierung des SCM-Systems erfüllt sind. Dementsprechend wird zum Zeitpunkt t₄ die selbsttätige Bremskrafterzeugung gebrochen, wie dem Kurvenverlauf 22 zu entnehmen ist.

Sowohl in Fig. 3 als auch in Fig. 4 nimmt die Betätigung des Beschleunigungspedals gemäß dem Kurvenverlauf 20a über den gesamten betrachteten Zeitraum monoton zu, d.h. die Betätigung wird nicht zurückgenommen, sondern steigt an oder verharrt auf einem erreichten Niveau.

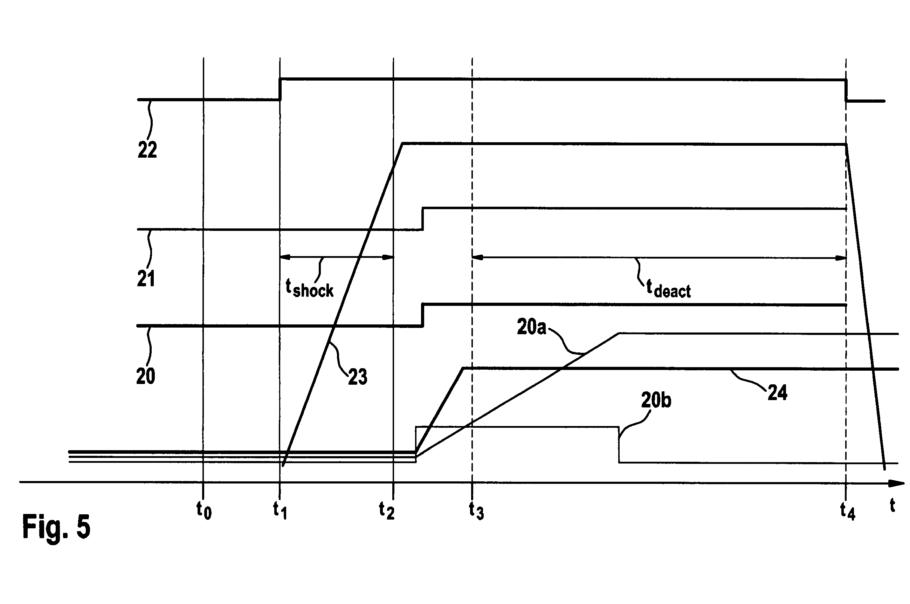

Im Ausführungsbeispiel gemäß Fig. 5 betätigt der Fahrer sowohl das Beschleunigungspedal als auch das Bremspedal, wie den Kurvenverläufen 20 und 21 zu entnehmen ist. Die Betätigung erfolgt gleichzeitig, und zwar zwischen den Zeitpunkten t₂ und t₃, also nach Ablauf der Schrecksekunde t_{shock}. Auf Grund der Betätigung des Bremspedals durch den Fahrer steigt auch der vom Fahrer generierte Bremsdruck gemäß Kurvenverlauf 24 an. Etwa mit dem Erreichen des Bremsdruckmaximums gemäß Kurvenverlauf 24 beginnt zum Zeitpunkt t₃ der Deaktivierungs- bzw. Mindestbetätigungszeitraum t_{deact}, dessen Dauer bis zum Zeitpunkt t₄ jedoch nicht fest ist, sondern von dem Erreichen eines bestimmten Wertes einer Fahrzustandsgröße abhängt. Im Ausführungsbeispiel handelt es sich um die Fahrzeuggeschwindigkeit; der Zeitpunkt t₄ und damit das Ende des Deaktivierungszeitraumes t_{deact} ist erreicht, wenn die Fahrzeuggeschwindigkeit einen Schwellen- bzw. Mindestwert erreicht. Daraufhin wird die selbsttätige Bremskrafterzeugung über das SCM-System, wie auch dem Kurvenverlauf 22 zu entnehmen, abgebrochen.

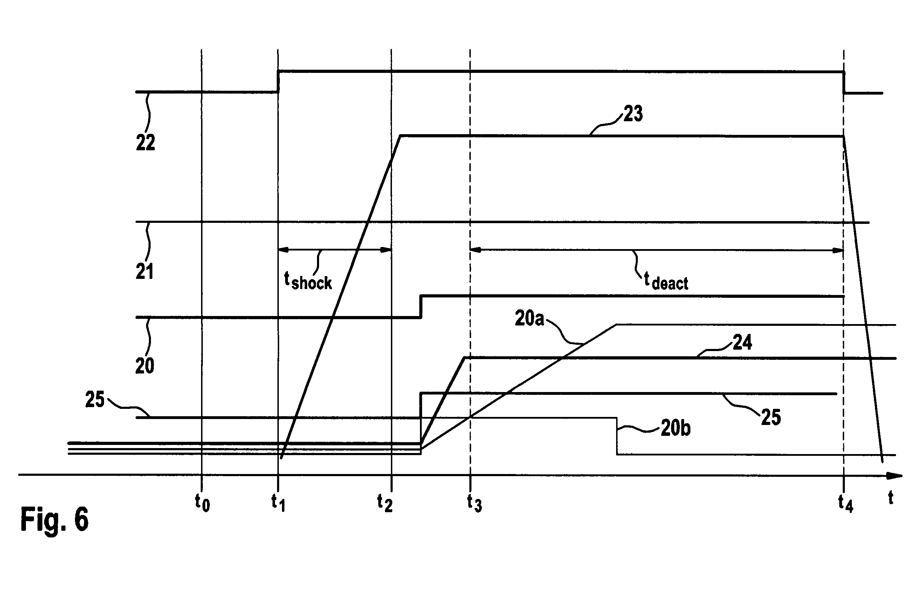

In Fig. 6 ist die Situation dargestellt, dass der Fahrer sowohl das Beschleunigungspedal gemäß Kurvenverlauf 20 als auch das Kupplungspedal gemäß Kurvenverlauf 25 betätigt. Der Beginn der Betätigung liegt im Zeitraum zwischen den Zeitpunkten t₂ und t₃, also nach Ablauf der Schrecksekunde t_{shock}. Beide Pedale werden gleichzeitig betätigt, die Betätigung bleibt bis über den Zeitpunkt t₄ hinausgehend aufrecht erhalten. Der Beginn des Deaktivierungs- bzw. Mindestbetätigungszeitraums t_{deac}t zum Zeitpunkt t₃ fällt mit dem Erreichen des vom Fahrer erzeugten Bremsdruckmaximums gemäß Kurvenverlauf 24 zusammen. Das Ende des Deaktivierungszeitraumes t_{deact} zum Zeitpunkt t₄ ist wie beim vorangegangenen Ausführungsbeispiel erreicht, sobald eine Fahrzustandsgröße einen zugeordneten Mindest- bzw. Schwellenwert erreicht hat, beispielsweise wenn die tatsächliche Fahrzeuggeschwindigkeit einen zugeordneten Mindestwert einnimmt. Daraufhin wird die selbsttätige Bremskrafterzeugung durch das SCM-System abgebrochen.

Zweckmäßigerweise ist der Abbruch der selbsttätigen Bremskrafterzeugung auf die vorgenannten Fahrerreaktionen beschränkt. Sonstige Fahrerreaktionen führen daher nicht zu einem Abbruch der selbsttätigen Bremskrafterzeugung, die durch das SCM-System generiert wird.

## Patentansprüche

1. Verfahren zur Einstellung eines Bremssystems eines Fahrzeugs, bei dem im Falle einer Kollision selbsttätig Bremskraft aufgebaut wird, wobei der selbsttätige Aufbau der Bremskraft durch eine definierte Fahrerreaktion abgebrochen wird, wenn die Betätigung eines Fahrpedals des Fahrzeugs (1) durch den Fahrer mit einer definierten Stärke und für einen Mindestbetätigungszeitraum (tₘᵢₙ) aufrecht erhalten wird,
**dadurch gekennzeichnet,**
**dass** verschiedene Fahrerreaktionen unterschieden werden und je nach Fahrerreaktion als Mindestbetätigungszeitraum (tₘᵢₙ) entweder eine feste Zeitspanne oder eine variable Zeitspanne festgelegt wird, wobei die Dauer der variablen Zeitspanne vom zeitlichen Verlauf einer Fahrzustandsgröße abhängt.

2. Verfahren nach Anspruch 1,
**dadurch gekennzeichnet, dass** die zu berücksichtigende Fahrzustandsgröße ein Mindestniveau erreichen muss.

3. Verfahren nach Anspruch 1 oder 2,
**dadurch gekennzeichnet, dass** die die zu berücksichtigende Fahrzustandsgröße die Fahrzeuggeschwindigkeit ist.

4. Verfahren nach einem der Ansprüche 1 bis 3,
**dadurch gekennzeichnet, dass** der Gradient der Fahrpedalbetätigung berücksichtigt wird.

5. Verfahren nach einem der Ansprüche 1 bis 4,
**dadurch gekennzeichnet, dass** das maximale Niveau der Fahrpedalbetätigung berücksichtigt wird.

6. Verfahren nach einem der Ansprüche 1 bis 5,
**dadurch gekennzeichnet, dass** die Fahrpedalbetätigung mit einem Mindestniveau betätigt werden muss, um den selbsttätigen Bremskraftaufbau abzubrechen.

7. Verfahren nach einem der Ansprüche 1 bis 6,
**dadurch gekennzeichnet, dass** der Abbruch des selbsttätigen Bremskraftaufbaus von einer Betätigung des Bremspedals abhängt.

8. Verfahren nach einem der Ansprüche 1 bis 7,
**dadurch gekennzeichnet, dass** der Abbruch des selbsttätigen Bremskraftaufbaus von einer Betätigung des Gaspedals abhängt.

9. Verfahren nach einem der Ansprüche 1 bis 8,
**dadurch gekennzeichnet, dass** der Abbruch des selbsttätigen Bremskraftaufbaus von einer Betätigung eines Kupplungspedals abhängt.

10. Verfahren nach einem der Ansprüche 1 bis 9,
**dadurch gekennzeichnet, dass** die Fahrerreaktion erst nach Ablauf einem Schreckzeitraum berücksichtigt wird.

11. Regel- bzw. Steuergerät, enthaltend mittel, die zur Durführung des Verfahrens nach einem der Ansprüche 1 bis 10 ansgestaltet sind.

12. Bremssystem mit einem Regel- bzw. Steuergerät nach Anspruch 11.

13. Bremssystem nach Anspruch 12,
**dadurch gekennzeichnet, dass** der selbsttätige Aufbau von Bremskraft über Stellsignale eines ESP-Steuergeräts erfolgt.

14. Fahrzeug mit einem Bremssystem nach Anspruch 12 oder 13.

## Claims

1. Method for adjusting a brake system of a vehicle, in which in the event of a collision braking force is automatically built up wherein the automatic build up of the braking force is aborted by a defined driver reaction if the activation of an accelerator pedal of the vehicle (1) by the driver is maintained with a defined strength and for a minimum activation time period (tₘᵢₙ),
**characterized**
**in that** various driver reactions are differentiated and, depending on the driver reaction, either a fixed period of time or a variable period of time is defined as the minimum activation time period (tₘᵢₙ), wherein the duration of the variable period of time depends on the chronological profile of a driving state variable.

2. Method according to Claim 1,
**characterized in that** the driving state variable which is to be taken into account has to reach a minimum level.

3. Method according to Claim 1 or 2,
**characterized in that** the driving state variable which has to be taken into account is the speed of the vehicle.

4. Method according to one of Claims 1 to 3,
**characterized in that** the gradient of the activation of the accelerator pedal is taken into account.

5. Method according to one of Claims 1 to 4,
**characterized in that** the maximum level of the activation of the accelerator pedal is taken into account.

6. Method according to one of Claims 1 to 5,
**characterized in that** the activation of the accelerator pedal has to be activated with a minimum level in order to abort the automatic build up of braking force.

7. Method according to one of Claims 1 to 6,
**characterized in that** the aborting of the automatic build up of braking force depends on activation of the brake pedal.

8. Method according to one of Claims 1 to 7,
**characterized in that** the aborting of the automatic build up of braking force depends on activation of the accelerator pedal.

9. Method according to one of Claims 1 to 8,
**characterized in that** the aborting of the automatic build up of braking force depends on activation of a clutch pedal.

10. Method according to one of Claims 1 to 9,
**characterized in that** the driver reaction is not taken into account until a panic reaction time period has expired.

11. Closed-loop or open-loop control device containing means which are designed to carry out the method according to one of Claims 1 to 10.

12. Brake system having a closed-loop or open-loop control device according to Claim 11.

13. Brake system according to Claim 12,
**characterized in that** the automatic build up of braking force takes place by means of actuation signals of an ESP control unit.

14. Vehicle having a brake system according to Claim 12 or 13.

## Revendications

1. Procédé de réglage du système de freinage d'un véhicule en vue d'établir de manière autonome une force de freinage en cas de collision,
l'établissement autonome de la force de freinage étant interrompu par une réaction définie du conducteur si le conducteur maintient l'actionnement de la pédale de frein du véhicule (1) avec une intensité définie et pendant une durée minimale d'actionnement (tₘᵢₙ), **caractérisé en ce que**
différentes réactions du conducteur sont distinguées et, selon la réaction du conducteur, une durée fixe ou une durée variable sont définies comme durées minimales d'actionnement (tₘᵢₙ), la durée variable dépendant de l'évolution d'une grandeur d'état de conduite au cours du temps.

2. Procédé selon la revendication 1, **caractérisé en ce que** la grandeur d'état de conduite prise en compte doit atteindre un niveau minimum.

3. Procédé selon les revendications 1 ou 2, **caractérisé en ce que** la grandeur d'état prise en compte est la vitesse du véhicule.

4. Procédé selon l'une des revendications 1 à 3, **caractérisé en ce que** le gradient de l'actionnement de la pédale de frein est pris en compte.

5. Procédé selon l'une des revendications 1 à 4, **caractérisé en ce que** le niveau maximum de l'actionnement de la pédale de frein est pris en compte.

6. Procédé selon l'une des revendications 1 à 5, **caractérisé en ce que** l'actionnement de la pédale de frein doit s'effectuer à un niveau minimum pour interrompre l'établissement autonome de la force de freinage.

7. Procédé selon l'une des revendications 1 à 6, **caractérisé en ce que** l'interruption de l'établissement autonome de la force de freinage dépend de l'actionnement de la pédale de frein.

8. Procédé selon l'une des revendications 1 à 7, **caractérisé en ce que** l'interruption de l'établissement autonome de la force de freinage dépend de l'actionnement de la pédale d'accélérateur.

9. Procédé selon l'une des revendications 1 à 8, **caractérisé en ce que** l'interruption de l'établissement autonome de la force de freinage dépend de l'actionnement de la pédale d'embrayage.

10. Procédé selon l'une des revendications 1 à 9, **caractérisé en ce que** la réaction du conducteur n'est prise en compte qu'après que se soit écoulée la durée d'une réaction réflexe.

11. Appareil de régulation ou de commande contenant des moyens configurés pour exécuter le procédé selon l'une des revendications 1 à 10.

12. Système de freinage présentant un appareil de régulation ou de commande selon la revendication 11.

13. Système de freinage selon la revendication 12, **caractérisé en ce que** l'établissement autonome de la force de freinage s'effectue par l'intermédiaire de signaux d'ajustement d'un appareil de commande dit ESP.

14. Véhicule doté d'un système de freinage selon les revendications 12 ou 13.
